# EUROPÄISCHE PATENTANMELDUNG

(11) **EP 4 203 225 A1**
(43) Veröffentlichungstag der Anmeldung: **28.06.2023**
(21) Anmeldenummer: 22208087.1
(22) Anmeldetag: 17.11.2022
(51) Int. Cl.: H02J 3/14, H02J 3/32, B60L 53/63

(54) **VERFAHREN ZUR REGELUNG EINER ABGERUFENEN LEISTUNG EINES HAUSHALTS**

(30) Priorität: 21.12.2021 DE 102021214784
(71) Anmelder: Robert Bosch GmbH, 70442 Stuttgart (DE)
(72) Erfinder: Kleuker, Ulf, 70839 Gerlingen (DE); Keukert, Jan, 12045 Berlin (DE); Freundorfer, Tobias, 74366 Kirchheim Am Neckar (DE); Schmidt, Alexander, 78166 Donaueschingen (DE); Schnurr, Nathan, 71726 Benningen (DE)

(57) **Zusammenfassung**

Die Erfindung betrifft ein Verfahren zur Regelung (36) einer abgerufenen Leistung (22), insbesondere einer abgerufenen Ladeleistung (24), zur gleichzeitigen Einhaltung einer Leistungsgrenze (28) und eines für einen Verbraucher (10), insbesondere für ein elektrifiziertes Fahrzeug (15), definierten Energie- oder Leistungsbedarfs (20). Dieses umfasst eine Erfassung des definierten Energie- oder Leistungsbedarfs (20), eine Schätzung einer Haushaltslast (2) umfassend mindestens zwei Verbraucher (10), sowie eine Berechnung (34) der abrufbaren Leistung (23) und eines daraus ermittelten Plans (35) für die abrufbare Leistung (23). Daneben betrifft die Erfindung eine Verwendung des Verfahrens in einem Cloud-basierten Dienst (30) zur Regelung (36) einer abgerufenen Leistung (22) sowie eine Verwendung zum Laden eines elektrifizierten Fahrzeugs (15) an einem Anschluss (6) eines Haushalts (1).

## Beschreibung

Die Erfindung betrifft ein Verfahren zur Regelung einer abgerufenen Leistung, insbesondere einer abgerufenen Ladeleistung, zur gleichzeitigen Einhaltung einer Leistungsgrenze und eines für einen Verbraucher, insbesondere für ein elektrifiziertes Fahrzeug, definierten Energie- oder Leistungsbedarfs. Dieses umfasst eine Erfassung des definierten Energie- oder Leistungsbedarfs mit einem gewünschten Zeithorizont, eine Schätzung einer Haushaltslast umfassend mindestens zwei Verbraucher, sowie eine Berechnung der abrufbaren Leistung und eines daraus ermittelten Plans für die abrufbare Leistung. Daneben betrifft die Erfindung eine Verwendung des Verfahrens in einem Cloud-basierten Dienst zur Regelung einer abgerufenen Leistung sowie eine Verwendung zum Laden eines elektrifizierten Fahrzeugs an einem Anschluss eines Haushalts.

### Stand der Technik

In vielen Ländern sind bereits sogenannte dynamische Stromtarife verfügbar, wobei der Verbrauchspreis für Elektrizität entweder in festen Tageszeiten variiert oder auf Basis der Strombörsendaten für die nächsten 24 h ermittelt wird. Daneben ist der Grundpreis für die Versorgung eines Haushalts üblicherweise an die maximale Anschlussleistung gekoppelt und dementsprechend gestaffelt. Stundengenaue Verbrauchswerte werden mit sogenannten Smart Metern erfasst, welche die zeitlich aufgelösten Messwerte automatisch an den Stromanbieter weitergeben. Beim Erwerb eines Elektrofahrzeugs müssen Kunden dieser dynamischen Tarife häufig auf einen deutlich teureren Anschluss umsteigen, um ihren Bedarf weiterhin zu decken, da eine Abstimmung der generellen Haushaltslast und der Ladung von Elektrofahrzeugen derzeit nicht möglich ist. Eine zentrale Notwendigkeit für eine solche Abstimmung ist die Schätzung der Haushaltslast.

DE 10 2012 213 907 A1 betrifft eine Steuervorrichtung zur Verwendung in einer Erzeuger-/Verbraucher-Anordnung, die unter anderem dazu geeignet ist, einen steuerbaren Verbraucher abzuschalten oder in seinem Verbrauch zu reduzieren, wenn der regenerative Energieerzeuger in der Anordnung mehr elektrische Leistung erzeugt, als die Verbraucher der Anordnung aktuell zusammen verbrauchen, und/oder dazu geeignet ist, den steuerbaren Verbraucher zuzuschalten oder in seinem Verbrauch zu erhöhen, wenn der regenerative Energieerzeuger weniger elektrische Leistung erzeugt, als die Verbraucher der Anordnung aktuell zusammen verbrauchen.

WO 2011 096 441 A1 hat ein Energieanzeigesystem zum Gegenstand, das in der Lage ist, den Stromverbrauch von Haushaltslasten und den Stromverbrauch des Ladens eines Elektrofahrzeugs sowohl von Netzstrom als auch von erzeugtem Strom anzuzeigen.

DE 11 2019 000 060 T5 hat ein Energieumwandlungssystem zum Gegenstand, umfassend eine Energieumwandlungseinrichtung, die Laden oder Entladen eines elektrisch betriebenen Fahrzeugs steuert, und ein Kabelrelais, das über ein erstes Kabel mit der Energieumwandlungseinrichtung verbunden ist und über ein zweites Kabel mit einem Verbinder verbunden ist, der mit dem elektrisch betriebenen Fahrzeug verbunden werden kann. Bei Bedarf ermöglicht es das Energieumwandlungssystem einer Haushaltslast, Elektrizität zu verwenden, die in einer Speicherbatterie gespeichert ist, die in elektrisch betriebenen Fahrzeugen installiert ist.

DE 10 2017 101 265 A1 offenbart ein System zum Bereitstellen von Echtzeit- und/oder Prognose-Informationen bezüglich einer Leistungsregelung eines Stromnetzes, wobei das Stromnetz mit mehreren Stromerzeugungsanlagen wirkverbunden ist, und wobei das System eine Empfangseinrichtung zum Empfangen von Daten einer elektronischen Datenbank aufweist, die die Daten einer Abschaltung/ Herabregelung der Stromerzeugungsanlagen in Folge eines Einspeisemanagements des Stromnetzes zuordnet. Ferner weist das System eine Verarbeitungs- und/oder Recheneinrichtung zum Verarbeiten dieser Daten auf, so dass diese als Informationen verknüpfbar und/oder bereitstellbar sind. Insbesondere ist dabei vorstellbar, dass Stromverbrauchszeitreihen auf Grundlage eines Lastmodells für Industrie-, Gewerbe- und Haushaltslast mittels der Verarbeitungs- und/oder Recheneinrichtung, und Stromerzeugungszeitreihen auf Grundlage des Stromerzeugungsmodells für die Stromerzeugungsanlagen bestimmbar sind. Beide Modelle bieten besonders für die realitätsnahe Umsetzung bzw. Berechnung einen Kompromiss aus Modellkomplexität und zu erwartender Modellgüte.

### Offenbarung der Erfindung

Erfindungsgemäß wird ein Verfahren zur Regelung einer abgerufenen Leistung, insbesondere einer abgerufenen Ladeleistung, zur gleichzeitigen Einhaltung einer Leistungsgrenze und eines für einen Verbraucher, insbesondere für ein elektrifiziertes Fahrzeug, definierten Energie- oder Leistungsbedarfs vorgeschlagen. Das Verfahren umfasst als Verfahrensschritte zumindest (a) eine Erfassung eines definierten Energie- oder Leistungsbedarfs mit einem gewünschten Zeithorizont, für einen Verbraucher, insbesondere ein elektrifiziertes Fahrzeug, (b) eine Weitergabe dieser Daten an den Betreiber eines Cloud-basierten Dienstes des Verbrauchers aus dem vorherigen Schritt, (c) eine Schätzung einer Haushaltslast, umfassend mindestens zwei Verbraucher, insbesondere mindestens einen Haushaltsverbraucher und mindestens eine Ladeleistung für ein elektrifiziertes Fahrzeug, für den gewünschten Zeithorizont, (d) eine Berechnung der abrufbaren Leistung unter Berücksichtigung der Leistungsgrenze, der im vorherigen Schritt geschätzten Haushaltslast und des zu Beginn definierten Energie- oder Leistungsbedarfs, und (e) eine Übermittlung eines Plans der im vorherigen Schritt berechneten abrufbaren Leistung an den Cloud-basierten Dienst des Verbrauchers aus dem anfänglichen Schritt.

Das offenbarte Verfahren bietet somit eine Lösung, um die Leistungsgrenze eines Haushaltsanschlusses jeder Zeit einzuhalten und trotzdem einen Verbraucher, wie ein elektrifiziertes Fahrzeug, gemäß Bedarf ausreichend mit Leistung zu versorgen.

In einer vorteilhaften Ausführungsform umfasst das Verfahren außerdem eine einmalige Eingabe von Kennparametern des Haushalts durch den Nutzer. Vorzugweise registriert sich der Nutzer dazu und kann die abgefragten Parameter somit für die individualisierte Nutzung dauerhaft hinterlegen.

In einer weiteren vorteilhaften Ausführungsform handelt es sich bei dem Verbraucher mit definiertem Energie- oder Leistungsbedarf um ein elektrifiziertes Fahrzeug, insbesondere ein elektrisches Fahrzeug (EV) oder ein Plug-in-Hybrid-Elektrofahrzeug (PHEV). Dieses kann erfindungsgemäß neben mindestens einem weiteren Verbraucher in Betrieb, insbesondere einem Haushaltsverbraucher, mit einem definierten Energie- oder Leistungsbedarf versorgt und vorzugsweise geladen werden, bei gleichzeitiger Einhaltung einer Leistungsgrenze des Haushalts.

In einer vorteilhaften Ausführungsform werden für die Regelung durch den Nutzer hinterlegte Sperrzeiten für eine Bedienung des definierten Energie- oder Leistungsbedarfs berücksichtigt, während denen die Leistungsgrenze der Haushaltslast durch Verbraucher, außer dem Verbraucher mit definiertem Energie- oder Leistungsbedarf, ausgenutzt wird.

Dadurch ist es dem Nutzer möglich, den Einsatz größerer bzw. leistungsintensiver elektrischer Geräte (z. B. Wäschetrockner, Heimsauna) im Voraus zu planen, ohne dadurch kurzfristig die Regelung der abgerufenen Leistung zu beeinflussen. Durch die Ankündigung der Sperrzeiten können diese im Verfahren berücksichtigt werden, so dass keine neuen Berechnungen oder Umplanungen notwendig werden, und der definierte Energie- oder Leistungsbedarf bei Einhaltung der Leistungsgrenze im gewünschten Zeithorizont trotzdem erreicht werden kann.

In einer weiteren vorteilhaften Ausführungsform erfolgt die Schätzung der Haushaltslast in oben genanntem Verfahrensschritt (c) anhand von Kenndaten des Haushalts, welche durch den Nutzer angegeben werden. Daneben erfolgt diese Schätzung der Haushaltslast in einer weiteren Ausführungsform, alternativ und/oder ergänzend, adaptiv mithilfe einer statistischen Auswertung von vorherigen Fehlermeldungen.

Somit kann die Schätzung der Haushaltslast als zentraler Aspekt des erfindungsgemäßen Verfahrens in unterschiedlichen Varianten ausgeführt werden, entsprechend den jeweils vorliegenden Bedingungen oder Einstellungen, wobei die Varianten alternativ durchgeführt werden und/oder sich gegenseitig ergänzen können. Grundsätzlich kann ein Haushalt durch den Nutzer anhand von spezifischen Kennwerten, etwa der Personenanzahl im Haushalt, großen Verbrauchern, typischen Nutzungszeiten, charakterisiert werden und daraus die tägliche Haushaltslast geschätzt werden. Adaptiv können für die Berechnungen bereits aufgetretene Fehlermeldungen, beispielsweise durch eine unerwartete Unterbrechung der abgerufenen Leistung aufgrund einer Überschreitung der Leistungsgrenze, berücksichtigt werden. Solche Informationen werden historisiert, statistisch ausgewertet und für künftige Berechnungen zur Verfügung gestellt.

In einer weiteren vorteilhaften Ausführungsform erfolgt diese Schätzung der Haushaltslast als weitere Variante mithilfe eines installierten Smart Meters anhand realer historischer Daten des Haushalts.

Dazu wird in einer vorteilhaften Ausführungsform eine Lastprognose durch einen Stromanbieter, der Zugang zu den Daten des Smart Meters hat, vorgenommen und für den Verfahrensschritt der Berechnung der abrufbaren Leistung zur Verfügung gestellt.

In einer weiteren Ausführungsform werden zu dieser Berechnung der abrufbaren Leistung und für den daraus erstellten Plan eine gewünschte und eine tatsächlich im Verbraucher mit definiertem Energie- oder Leistungsbedarf, insbesondere einem elektrifizierten Fahrzeug, vorhandene Leistung, insbesondere Ladeleistung, sowie die Differenz von Leistungsgrenze und der vorliegenden Haushaltslast berücksichtigt, und außerdem ist optional, entsprechend der zeitlichen Auflösung des Smart Meters, für diesen Plan der berechneten abrufbaren Leistung eine ereignisbasierte Strategie mit der Möglichkeit von Neuberechnungen während des Verfahrens auswählbar.

Smart Meter finden sich in immer mehr Haushalten, sind zukünftig verpflichtend zu installieren und können für das erfindungsgemäße Verfahren vorteilhaft genutzt werden. Neben den zuvor genannten Fehlermeldungen können weitere reale historische Daten des Haushalts berücksichtigt werden, insbesondere für eine genauere Lastprognose des Haushalts. Bieten Modell und Einstellungen des Smart Meters die notwendigen Voraussetzungen, können außerdem der aktuelle Zustand, nämlich die tatsächliche Leistung, des Verbrauchers einbezogen und eine gewünschte Strategie für den Abruf des definierten Energie- oder Leistungsbedarfs vorgegeben werden. Informationen und Daten des Stromanbieters können dazu über eine Content Provider-Schnittstelle zur Verfügung gestellt werden.

In einer weiteren vorteilhaften Ausführungsform wird im erfindungsgemäßen Verfahren eine bevorzugte Leistungsgrenze für den Haushalt berechnet und dem Nutzer zur Verfügung gestellt.

Aus der Schätzung der Haushaltslast und dem definierten Energie- oder Leistungsbedarf mit gewünschtem Zeithorizont, ergibt sich eine Auslastung der gegebenen Leistungsgrenze des Haushalts, welche Rückschlüsse auf die dauerhaft notwendige Kapazität des Anschlusses zulässt. Somit lässt sich anhand der durch Ausführung des Verfahrens generierten Daten eine individuelle Empfehlung für eine vorteilhafte Leistungsgrenze in Bezug auf Auslastung und Kostenminimierung angeben.

In einer weiteren vorteilhaften Ausführungsform ist der Verbraucher mit definiertem Energie- oder Leistungsbedarf an ein separates Smart Meter angeschlossen. Dies ermöglicht eine genauere Überwachung der abgerufenen Leistung zur Deckung des definierten Energie- oder Leistungsbedarfs, insbesondere während des gewünschten Zeithorizonts, und kann für die Regelung hinzugezogen werden.

In einer weiteren vorteilhaften Ausführungsform ist das Verfahren für den Nutzer über eine digitale Benutzer-Oberfläche, insbesondere eine Smartphone-App oder auf einem Bord-Computer eines elektrifizierten Fahrzeugs, steuerbar ist. Dies ermöglicht dem Nutzer eine einfache Eingabe von Daten oder Einstellungen, etwa zur Aktualisierung von Kennwerten, Ergänzen von neuen Informationen oder Ändern individueller Präferenzen, so dass diese kurzfristig im Verfahren berücksichtigt werden können.

Darüber hinaus soll das vorgeschlagene Verfahren erfindungsgemäß zum Laden eines elektrifizierten Fahrzeugs an einem Anschluss eines Haushalts verwendet werden, insbesondere unter Verwendung einer Wandladestation als Verbindung zwischen elektrifiziertem Fahrzeug und Stromnetz sowie Betreiber des Cloud-basierten Dienstes. Damit kann mit Hilfe des Verfahrens der Energie- oder Leistungsbedarf im gewünschten Zeithorizont für den Ladevorgang des elektrifizierten Fahrzeugs geregelt und auf die abgerufene Leistung anderer Verbraucher abgestimmt werden, um den Energie- oder Leistungsbedarf zu decken und gleichzeitig die Leistungsgrenze des Haushalts nicht zu überschreiten.

Außerdem soll das vorgeschlagene Verfahren erfindungsgemäß in einem Cloud-basierten Dienst verwendet werden, welcher die abgerufene Leistung eines Haushalts regelt zur gleichzeitigen Einhaltung einer Leistungsgrenze und eines für einen Verbraucher definierten Energie- oder Leistungsbedarfs. Ein solcher Dienst kann somit die abgerufene Leistung verschiedener Verbraucher eines Haushalts aufeinander abstimmen und gemäß den definierten Vorgaben regeln.

### Vorteile der Erfindung

Durch die erfindungsgemäß vorgeschlagene Lösung wird es dem Nutzer ermöglicht, die abgerufene Leistung von Verbrauchern und damit verschiedene Haushaltslasten, aufeinander abzustimmen. Somit kann die Leistungsgrenze am Netzanschlusspunkt eines Haushaltsanschlusses eingehalten und trotzdem ein Verbraucher, wie ein zu ladendes elektrifiziertes Fahrzeug, mit einem definierten Energie- oder Leistungsbedarf innerhalb eines gewünschten Zeithorizonts, versorgt werden. Das Einhalten einer Leistungsgrenze an einem Netzanschlusspunkt ist insbesondere essentiell aufgrund durch den Stromtarif bedingter Vorgaben. Wird die vorgegebene Leistungsgrenze überschritten, ist der Wechsel in einen anderen, entsprechend teureren Tarif notwendig um den Bedarf zu decken. Mithilfe des erfindungsgemäßen Verfahrens kann die abgerufene Leistung regelte, die Leistungsgrenze optimal genutzt und ein Wechsel des Tarifs somit vermieden werden. Damit können die Kosten, die für das gemäß Bedarf ausreichende Laden eines elektrifizierten Fahrzeugs am Anschluss eines Haushalts anfallen, trotz dieses leistungsintensiven Verbrauchers minimal gehalten werden.

Daneben ist ein Vorteil des offenbarten Verfahrens, dass neben der Einhaltung der Leistungsgrenze des Haushalts der definierte Energie- oder Leistungsbedarf für einen Verbraucher ausreichend gedeckt wird. Das heißt, bei einer Anwendung zum Laden eines elektrifizierten Fahrzeugs wird der Mobilitätsbedarf des Nutzers insofern sichergestellt, dass im vorgegebenen Zeithorizont, also zur gewünschten Abfahrtszeit, der Ladezustand die benötigte Reichweite zusichert.

Das offenbarte Verfahren bietet außerdem Möglichkeiten zur individuellen Anpassung an den jeweiligen Nutzer, etwa in Form von Kenndaten und Angaben zu Haushalt, Verbrauchern, bevorzugten Zeiten und Nutzungen. So können Kennparamater des Haushalts eingegeben werden, ebenso wie Kenndaten zu Verbrauchern und Nutzer, sowie individuelle Präferenzen etwa in Form von Sperrzeiten, Angaben zu Nutzung von Haushaltsverbrauchern, insbesondere einer Ankündigung der Nutzung leistungsstarker Verbraucher, und vor allem durch Erfassung des definierten Energie- oder Leistungsbedarfs mit gewünschtem Zeithorizont für einen bestimmten Verbraucher.

Gleichzeitig wird zur Durchführung des Verfahrens grundsätzlich bereits vorhandene Hardware genutzt, ohne dass weitere Elemente notwendig sind. Für eine individuelle Ergänzung des Verfahrens können einzelne Geräte, wie beispielsweise ein Smart Meter, hinzugefügt und in das Verfahren eingebunden werden. Zur Steuerung des Verfahrens, welches online, insbesondere durch einen Cloud Dienst bereitgestellt wird, sind beispielsweise digitale Benutzer-Oberflächen in Smartphone-Apps oder auf Bord-Computern elektrifizierter Fahrzeuge einsetzbar.

Diese Nutzung der vorhandenen Hardware und die Möglichkeit modularer Ergänzungen beruht darauf, dass die Schätzung der Haushaltslast, welche einen zentralen Aspekt des erfindungsgemäßen Verfahrens darstellt, auf verschiedene Weisen durchgeführt werden kann. Je nach Gegebenheiten und individuellen Präferenzen kann die Schätzung der Haushaltslast unterschiedlich komplex und anhand diverser Grundlagen erfolgen, wobei die Vorgehensweisen kombinierbar sind. So können individualisiert Daten über Haushalt und/ oder Sperrzeiten hinterlegt werden, ebenso wie auch eine Berücksichtigung historischer Daten möglich ist. Durch das potentielle Einbeziehen eines Smart Meters sind anhand realer historischer Daten des Haushalts sehr genaue Prognosen möglich. Diese lassen sich auch zur anschließenden Berechnung der abrufbaren Leistung und für den daraus erstellten Plan hinzuziehen. Daneben bietet ein entsprechend eingestelltes Smart Meter außerdem ereignisbasierte Ladestrategien mit der Möglichkeit von Neuberechnungen während des Verfahrens, so dass die zur Verfügung stehende Leistung stets optimal genutzt werden kann.

Alternativ kann das Verfahren auch zum Lastmanagement durch den Netzbetreiber/ Stromanbieter verwendet werden. Dazu kann dieser die zu einem bestimmten Zeitpunkt zulässige Haushaltslast am Haushaltsanschluss für einen oder eine Vielzahl von Haushaltsanschlüssen begrenzen. Mit dieser Information kann über den Cloud-basierten Dienst eine Anpassung des Plans der berechneten Abrufbaren Leistung initiiert werden. Dadurch werden Betriebskosten reduziert, welche in einem grundsätzlich günstigeren Vertragsmodell oder ereignisorientiert gegenüber dem Nutzer bzw. Haushalt vergütet werden können.

### Kurze Beschreibung der Zeichnungen

Ausführungsformen der Erfindung werden anhand der Zeichnung und der nachfolgenden Beschreibung näher erläutert.

Es zeigt:

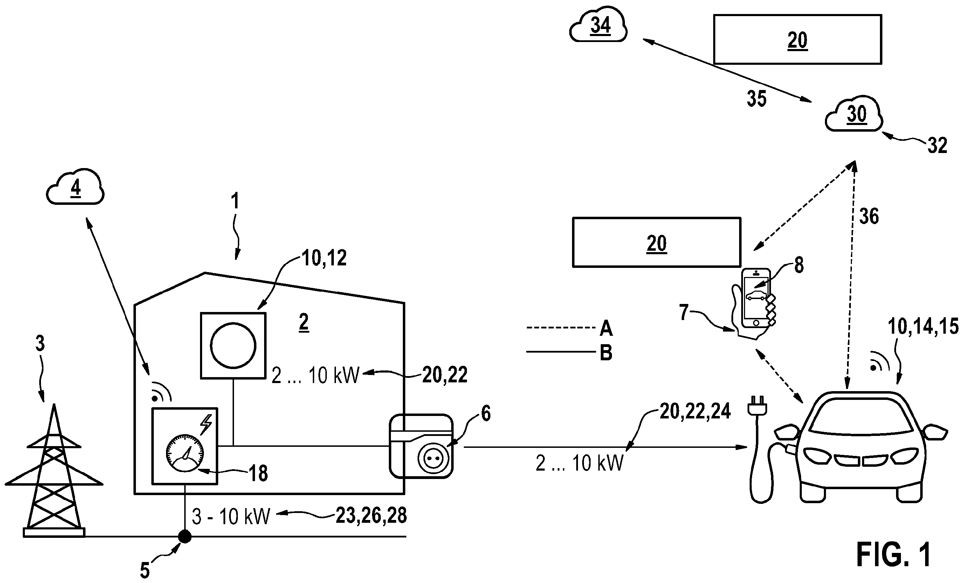

- Figur 1: einen schematischen Aufbau für eine bevorzugte Ausführungsform des erfindungsgemäßen Verfahrens, wobei eine abgerufene Ladeleistung geregelt wird zur gleichzeitigen Einhaltung einer Leistungsgrenze und eines für die Ladung eines elektrifizierten Fahrzeugs definierten Energie- oder Leistungsbedarfs mit einem gewünschten Zeithorizont.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

Figur 1 zeigt schematisch eine bevorzugte Ausführungsform des erfindungsgemäß vorgeschlagenen Verfahrens zur Regelung 36 einer abgerufenen Leistung 22. Dargestellt ist der Ladevorgang eines elektrifizierten Fahrzeugs 15 am Anschluss 6 eines Haushalts 1, wobei die abgerufene Ladeleistung 24 als definierter Energie- oder Leistungsbedarf 20 mit einem gewünschten Zeithorizont geregelt wird zur gleichzeitigen Einhaltung der Leistungsgrenze 28 des Haushalts 1 und Deckung dieses definierten Energie- oder Leistungsbedarfs 20 unter Verwendung eines Smart Meters 18.

Bei einem "elektrifizierten Fahrzeug" der vorliegenden Offenbarung handelt es sich um ein Fahrzeug, insbesondere ein Personenkraftfahrzeug oder ein kleines Nutzlastkraftfahrzeug, welches zumindest teilweise elektrisch angetrieben wird, beispielsweise ein elektrisches Fahrzeug (electric vehicle, EV) oder ein Plug-in-Hybrid-Elektrofahrzeug (plug-in hybrid electric vehicle, PHEV).

Ein "Smart Meter" bezeichnet ein Messgerät in Form eines intelligenten Zählers, welcher über eine Kommunikationseinheit verfügt und damit digital Daten empfangen und senden kann. Empfangene Daten schließen beispielsweise den Stromtarif ein, gesendete Daten beispielsweise die durchgeleitete elektrische Energie und können sowohl dem Versorgungsunternehmen als auch dem Kunden (Nutzer 7) zur Verfügung gestellt werden. So können aktuelle Verbrauchsdaten kommuniziert werden. Der Rhythmus der Übertragungen ist dabei abhängig von Modell und Einstellungen des Smart Meters 18. Im Rahmen der vorliegenden Erfindung bezeichnet ein "Smart Meter" insbesondere einen intelligenten Stromzähler.

Schematisch dargestellt ist ein Haushalt 1, umfassend zwei Verbraucher 10: einen Haushaltsverbraucher 12 sowie ein elektrifiziertes Fahrzeug 15, welches zum Laden mit einem Anschluss 6 des Haushalts 1 verbunden ist. Der Haushalt 1 selbst ist über einen Hauptanschluss 5 mit dem Stromnetz 3 verbunden. Hier wird eine Leistung gemäß Tarif 26 zur Verfügung gestellt. Diese gibt gleichzeitig die Leitungsgrenze 28 für den Haushalt 1/ die Haushaltslast 2 vor und die insgesamt durch die Verbraucher 10 abrufbare Leistung 23. Der Hauptanschluss 5 ist mit einem Smart Meter 18 ausgestattet, welches einerseits die abgerufene Leistung 22 misst und andererseits mit dem Stromanbieter 4 kommuniziert.

Die abrufbare Leistung 23 soll den Energie- oder Leistungsbedarf 20 der Verbraucher 10 im Haushalt 1 decken und wird diesen als Energie B zur Verfügung gestellt. Die abgerufene Leistung 22 ist dabei abhängig von Art und Nutzung der Haushaltsverbraucher 12 sowie von der gewünschten Ladeleistung 24 für das elektrifizierte Fahrzeug 15. Dieses stellt in der vorliegenden Ausführungsform den Verbraucher mit definiertem Energie- oder Leistungsbedarf 14 dar, dessen abgerufene Leistung 22 durch das erfindungsgemäße Verfahren geregelt wird.

Der Energie- oder Leistungsbedarf 20 wird durch den Nutzer 7 definiert, indem er einen gewünschten Ladezustand des elektrifizierten Fahrzeugs 15, ggf. als eine gewünschte Reichweite, und einen gewünschten Zeithorizont für das Ende der Ladung vorgibt. Somit kann die Erfassung eines Energie- oder Leistungsbedarfs 20 durch direkte Eingabe oder durch Ermittlung aus einem Reichweitenwunsch und einem gewünschten Zeithorizont erfolgen. Die Kombination aus Energie- oder Leistungsbedarfs 20 und Zeithorizont gibt für die durchzuführende Berechnung 34 den minimalen mittleren Bedarf vor.

Die Erfassung durch den Nutzer 7 erfolgt über eine digitale Benutzer-Oberfläche 8, beispielsweise einer Smartphone-App, oder auch auf einem Bord-Computer des elektrifizierten Fahrzeugs 15, einer Wandladestation oder einer mobilen Ladestation. Eine Erfassung der Daten wird nach Weitergabe durch den Betreiber eines Cloud-basierten Dienstes 32 des elektrifizierten Fahrzeugs 15 vorgenommen.

Als zentraler Aspekt des Verfahrens erfolgt eine Schätzung der Haushaltslast 2, umfassend die zwei dargestellten Verbraucher 10 - Haushaltsverbraucher 12 und elektrifiziertes Fahrzeug 15 - für den relevanten Zeithorizont, vorzugweise mittels einer und/oder einer Kombination der oben offenbarten Varianten. Dabei kann die Schätzung der Haushaltslast 2 anhand von durch den Nutzer 7 angegebenen Kenndaten des Haushalts 1 erfolgen und/ oder adaptiv mithilfe einer statistischen Auswertung vorheriger Fehlermeldungen. Gegebenenfalls können durch den Nutzer 7 hinterlegte Sperrzeiten für eine Bedienung des definierten Energie- oder Leistungsbedarfs 20, also hier für den Ladevorgang, berücksichtigt werden, wie oben ausgeführt. Das installierte Smart Meter 18 erlaubt daneben auch eine Schätzung der Haushaltslast 2 anhand realer historischer Daten sowie eine Lastprognose durch den Stromanbieter 4, welcher Zugang zu den Daten des Smart Meters 18 hat.

Anschließend folgt eine Berechnung 34 der abrufbaren Leistung 23 unter Berücksichtigung der beim Cloud-basierten Dienst 30 erfassten Daten, nämlich des definierten Energie- oder Leistungsbedarfs 20 mit gewünschtem Zeithorizont, der Leistungsgrenze 28, und der geschätzten Haushaltslast 2. Der daraus erstellte Plan 35 der berechneten abrufbaren Leistung 23 wird an den Cloud-basierten Dienst 30 des Verbrauchers 10, hier des elektrifizierten Fahrzeugs 15, übermittelt und somit die Regelung 36 der abgerufenen Leistung 22, hier der abgerufenen Ladeleitung 24, ermöglicht. Dabei ist bei dessen Durchführung die Möglichkeit einer kontinuierlichen Kontrolle A zwischen dem elektrifiziertem Fahrzeug 15 als Verbraucher mit definiertem Energie- oder Leistungsbedarf 14, dem Cloud-basierten Dienst 30 und dem Nutzer 7 mittels der digitalen Benutzer-Oberfläche 8 gegeben.

Bevorzugt kann für die genannte Berechnung 34 und den entsprechend erstellten Plan 35, basierend auf den durch das Smart Meter 18 zur Verfügung gestellten Daten, eine gewünschte und eine tatsächlich im Verbraucher mit definiertem Energie- oder Leistungsbedarf 14, insbesondere einem elektrifizierten Fahrzeug 15, vorhandene Leistung, insbesondere Ladeleistung 24, sowie die Differenz von Leistungsgrenze 28 und der vorliegenden Haushaltslast 2 berücksichtigt werden. Entsprechend der zeitlichen Auflösung des Smart Meters 18 ist es optional außerdem möglich, für den Plan 35 der berechneten abrufbaren Leistung 23 eine ereignisbasierte Strategie mit der Möglichkeit von Neuberechnungen während des Verfahrens auszuwählen.

Im vorliegenden Ausführungsbeispiel kann somit gemäß dem erstellten Plan 35 eine geregelte Ladung des elektrifizierten Fahrzeugs 15 unter gleichzeitiger Einhaltung der Leistungsgrenze 28 des Haushalts 1 und des für das elektrifizierte Fahrzeug 15 definierten Energie- oder Leistungsbedarfs 20 mit gewünschtem Zeithorizont ausgeführt werden.

Ein Anschluss des elektrifizierten Fahrzeugs 15 als Verbraucher mit definiertem Energie- oder Leistungsbedarf 14 an ein separates Smart Meter 18 liegt in der abgebildeten Ausführungsform nicht vor. Ebenso ist die mögliche Verwendung einer Wandladestation als Verbindung zwischen elektrifiziertem Fahrzeug 15 und Stromnetz 3 sowie dem Betreiber des Cloud-basierten Dienstes 32 nicht dargestellt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Regelung (36) einer abgerufenen Leistung (22), insbesondere einer abgerufenen Ladeleistung (24), zur gleichzeitigen Einhaltung einer Leistungsgrenze (28) und eines für einen Verbraucher (10), insbesondere für ein elektrifiziertes Fahrzeug (15), definierten Energie- oder Leistungsbedarfs (20) mit zumindest nachfolgenden Verfahrensschritten:
a) Erfassung eines definierten Energie- oder Leistungsbedarfs (20) mit einem gewünschten Zeithorizont für einen Verbraucher (10), insbesondere ein elektrifiziertes Fahrzeug (15),
b) Weitergabe der Daten aus Schritt a) an den Betreiber eines Cloud-basierten Dienstes (32) des Verbrauchers (10) aus Schritt a),
c) Schätzung einer Haushaltslast (2), umfassend mindestens zwei Verbraucher (10), insbesondere mindestens einen Haushaltsverbraucher (12) und mindestens eine Ladeleistung (24) für ein elektrifiziertes Fahrzeug (15), für den gewünschten Zeithorizont,
d) Berechnung (34) der abrufbaren Leistung (23) unter Berücksichtigung der Leistungsgrenze (28), der geschätzten Haushaltslast (2) aus Schritt c) und des in Schritt a) definierten Energie- oder Leistungsbedarfs (20), und
e) Übermittlung eines Plans (35) der in Schritt d) berechneten abrufbaren Leistung (23) an den Cloud-basierten Dienst (30) des Verbrauchers (10) aus Schritt a).

2. Verfahren gemäß Anspruch 1 umfassend eine einmalige Eingabe von Kennparametern des Haushalts (1) durch den Nutzer (7).

3. Verfahren gemäß Anspruch 1 oder 2, **dadurch gekennzeichnet, dass** es sich bei dem Verbraucher mit definiertem Energie- oder Leistungsbedarf (14) um ein elektrisches Fahrzeug (EV) oder ein Plug-in-Hybrid-Elektrofahrzeug (PHEV) handelt.

4. Verfahren gemäß einem der Ansprüche 1 bis 3, **dadurch gekennzeichnet, dass** die Schätzung der Haushaltslast (2) in Schritt c) anhand von Kenndaten des Haushalts (1), welche durch den Nutzer (7) angegeben werden, erfolgt.

5. Verfahren gemäß einem der Ansprüche 1 bis 4, **dadurch gekennzeichnet, dass** die Schätzung der Haushaltslast (2) in Schritt c), alternativ und/oder ergänzend, adaptiv mithilfe einer statistischen Auswertung von vorherigen Fehlermeldungen erfolgt.

6. Verfahren gemäß einem der Ansprüche 1 bis 5, unter Berücksichtigung von durch den Nutzer (7) hinterlegten Sperrzeiten für eine Bedienung des definierten Energie- oder Leistungsbedarfs (20), während denen die Leistungsgrenze (28) der Haushaltslast (2) durch Verbraucher (10), außer dem Verbraucher mit definiertem Energie- oder Leistungsbedarf (14), ausgenutzt wird.

7. Verfahren gemäß einem der Ansprüche 1 bis 6, **dadurch gekennzeichnet, dass** die Schätzung der Haushaltslast (2) in Schritt c) mithilfe eines installierten Smart Meters (18) anhand realer historischer Daten des Haushalts (1) erfolgt.

8. Verfahren gemäß Anspruch 7, **dadurch gekennzeichnet, dass** eine Lastprognose durch einen Stromanbieter (4), der Zugang zu den Daten des Smart Meters (18) hat, vorgenommen und für die Berechnung (34) der abrufbaren Leistung (23) in Schritt d) zur Verfügung gestellt wird.

9. Verfahren gemäß Anspruch 7 oder 8, **dadurch gekennzeichnet, dass** zur Berechnung (34) der abrufbaren Leistung (23) in Schritt d) und für den daraus erstellten Plan (35) eine gewünschte und eine tatsächlich im Verbraucher mit definiertem Energie- oder Leistungsbedarf (14), insbesondere einem elektrifizierten Fahrzeug (15), vorhandene Leistung, insbesondere Ladeleistung (24), sowie die Differenz von Leistungsgrenze (28) und der vorliegenden Haushaltslast (2) berücksichtigt werden, und optional, entsprechend der zeitlichen Auflösung des Smart Meters (18), für den Plan (35) der in Schritt d) berechneten abrufbaren Leistung (23) eine ereignisbasierte Strategie mit der Möglichkeit von Neuberechnungen während des Verfahrens auswählbar ist.

10. Verfahren gemäß einem der Ansprüche 7 bis 9, **dadurch gekennzeichnet, dass** eine bevorzugte Leistungsgrenze (28) für den Haushalt (1) berechnet und dem Nutzer (7) zur Verfügung gestellt wird.

11. Verfahren gemäß einem der Ansprüche 1 bis 10, **dadurch gekennzeichnet, dass** der Verbraucher mit definiertem Energie- oder Leistungsbedarf (14) an ein separates Smart Meter (18) angeschlossen ist.

12. Verfahren gemäß einem der Ansprüche 1 bis 11, welches über eine digitale Benutzer-Oberfläche (8), insbesondere eine Smartphone-App oder auf einem Bord-Computer eines elektrifizierten Fahrzeugs (15), für den Nutzer (7) steuerbar ist.

13. Verwendung des Verfahrens gemäß einem der Ansprüche 1 bis 12 zum Laden eines elektrifizierten Fahrzeugs (15) an einem Anschluss (6) eines Haushalts (1), insbesondere unter Verwendung einer Wandladestation als Verbindung zwischen elektrifiziertem Fahrzeug (15) und Stromnetz (3) sowie Betreiber des Cloud-basierten Dienstes (32).

14. Verwendung des Verfahrens gemäß einem der Ansprüche 1 bis 12 in einem Cloud-basierten Dienst (30), welcher die abgerufene Leistung (22) eines Haushalts (1) regelt zur gleichzeitigen Einhaltung einer Leistungsgrenze (28) und eines für einen Verbraucher (10) definierten Energie- oder Leistungsbedarfs (20).
